# EUROPEAN PATENT APPLICATION

(11) **EP 4 238 467 A1**
(43) Date of publication of application: **06.09.2023**
(21) Application number: 22160059.6
(22) Date of filing: 03.03.2022
(51) Int. Cl.: A47K 11/02, E03D 11/14

(54) **A DRY TOILET**

(71) Applicant: Ecosave BV, 8256 PP Biddinghuizen (NL)
(72) Inventor: VANDY, Daniël Marion Henry, 8256 PP Biddinghuizen (NL)
(74) Representative: Plaggenborg, Menko Bernard

(57) **Abstract**

The invention relates to a dry toilet, comprising a frame construction for carrying a cover portion, wherein the frame construction furthermore comprises a fixing frame for a hanging mounting of the dry toilet to a wall. Preferably, the fixing frame is embodied for connection to the wall and the frame construction for carrying the cover portion is embodied for cooperative coupling to the fixing frame.

## Description

The present invention relates to a dry toilet according to the preamble of claim 1.

It is known in the art to use dry toilets, especially in campers, boats, tiny hoses and the like.

Such known dry toilet provides the advantage that no fresh water connection is required for flushing the toilet.

A disadvantage of these known dry toilets is their instability, both in use and when idle. Such instability especially is a huge disadvantage when removing the bucket, or container, for feces.

The invention aims at providing an improved dry toilet of the kind mentioned in the preamble.

The invention further aims at providing a dry toilet that provides improved stability, both when in use and when idle.

So as to obtain at least one of the above mentioned aims, the invention provides a dry toilet as mentioned in claim 1. This dry toilet has the advantage that it has optimum stability in all circumstances.

It has also shown that the dry toilet according to the present invention is easy to install at low costs. In addition, the room the dry toilet is placed can be cleaned more easily and better than with a conventional dry toilet. Such synergistic effect is an advantageous effect.

The invention therefore relates to a dry toilet, comprising a frame construction for carrying a cover portion, wherein the frame construction furthermore comprises a fixing frame for a hanging mounting of the dry toilet to a wall.

The fixing frame is fixed to a wall or any other suitable object after which preferably the frame construction for carrying the cover portion is coupled to said fixing frame. As a result, the dry toilet is hanging from the wall, allowing a user to stably use the toilet and safely remove and change a container for receiving feces without any chance of instability and topping over of the dry toilet.

Consequently, the invention also relates to an embodiment wherein the fixing frame is embodied for connection to the wall and the frame construction for carrying the cover portion is embodied for cooperative coupling to the fixing frame.

According to another preferred embodiment, the frame construction for carrying the cover portion is embodied for detachable coupling to the fixing frame. This allows a user to easily install the dry toilet through easy to apply steps and wherein the user can easily reach all required mounting positions of the dry toilet.

It is especially preferred in the dry toilet according to the present invention, that the cover portion comprises a first part for receiving urine and a second part for receiving feces. This allows for a separated collection and removal of wet and dry parts.

It is especially preferred in such embodiment of separated collection, that the first part of the cover portion for receiving urine is embodied for guiding urine to a drain and wherein the second part of the cover portion for receiving feces is embodied for guiding feces to a container.

A strong and stable embodiment can be relatively easily be obtained by any skilled person when at least one of the frame construction for carrying a cover portion and the fixing frame is made of a metal or steel.

It is especially preferred that the frame construction for carrying a cover portion is embodied for supporting a cover portion with a toilet seat. Such embodiment amongst others allows to manufacture a compact dry toilet.

As such, it is especially preferred that the dry toilet according to the invention further comprises a cover portion with a toilet seat, and wherein the toilet seat is placed above the cover portion and supports on the cover portion when in use.

According to a further preferred embodiment, the cover portion comprises a receiving part for receiving human excrements and urine that is at least partially positioned within a circumference defined by the toilet seat. The receiving part is embodied for receiving the feces and urine from the user and, for example, passing these on to a container and a drain, respectively.

So as to provide a simple and automatic correct collection of feces and urine, the dry toilet according to the present invention is preferably embodied by a back side being positioned near the fixing frame and a front side being positioned away from the fixing frame, wherein in the cover portion a part for receiving urine is positioned near the front side and a part for receiving feces is positioned nearer to the back side.

In the dry toilet according to the invention, a structurally simple and strong embodiment is obtained when the frame construction for carrying a cover portion comprises a U-shaped frame element, the end of two legs of the U-shaped frame element being positioned near the fixing frame.

When the two legs each comprise a support element for supporting a container for feces, the said container may be kept at a position above a floor or the like, so as to save space below the dry toilet, which amongst others contributes to easy cleaning of the room and also ensures that the container remains at a predetermined distance from the cover portion.

In such embodiment, it is especially preferred that the support elements for supporting the container for feces are positioned at a lower position during use than a supporting element for supporting a toilet seat. For, in such case a user can safely sit on the toilet seat whereas the container is close by, allowing for a safe collection of feces.

A safe collection of urine is ensured when the part for receiving urine is embodied as a funnel shaped portion, said funnel shaped portion being closed at an upper side against the cover portion and at a bottom side ending in an outflow opening. The outflow opening may be coupled to a drain.

In a corresponding way, the part for receiving feces may also be embodied as a funnel shaped portion closed at an upper side against the cover portion and at a bottom side ending in an outflow opening for discharging in a container for feces.

So as to dry the contents of the container, a ventilator may be added to the dry toilet for air intake from the room the dry toilet is located, through the container for feces and to an outside of the room. The outflow of air may be to the outside environment. So as to safe energy, the air intake may also be from the outside, allowing for a closed system wherein no heat from the room is lost. The ventilator may be run for a couple of minutes when and after a user has used the dry toilet and which may be sufficient for a sufficient drying of the contents of the container.

So as to make the toilet have the appearance of a regular toilet and for shielding the room from odours, a housing may be provided surrounding the frame construction for carrying the cover portion and wherein the housing is embodied for supporting the container for feces, preferably wherein the housing comprises a bottom for supporting a container for feces.

In such embodiment, it is especially preferred that the housing substantially aligns with a circumference of the cover portion.

The cover portion may be made of a plastic material that is supported by the frame construction for carrying the cover portion, as mentioned before. However, it may be made of steel or metal, preferably stainless steel. The toilet seat that is supported by the cover portion may be made of plastic or steel or metal, preferably stainless steel.

The cover portion may for example be coupled hingedly to the frame construction so as to provide entrance to the container and for removing said container.

Also, the toilet seat may be coupled hingedly to the dry toilet, for example hingedly to the frame construction of hingedly to the cover portion.

A flap like element may be provided above the container in the receiving part for feces so as to cover the container when the dry toilet is not in use. This eliminates odors in the room the dry toilet is situated. According to a first embodiment, the flap can be operated manually by a user so as to provide an opening to the container. According to a second embodiment, the flap can be operated automatically, for example by operating a handle that is actuated when a toilet seat is positioned on the cover portion, the cover portion containing the handle for operating the flap.

Hereafter, the invention will be further described by means of a drawing. The drawing shows in:
Fig. 1 a first view of a hanging dry toilet in accordance with the present invention,
Fig. 2 a side cross section of a hanging dry toilet in accordance with the present invention,
Fig. 3 a perspective view of a frame for mounting and supporting the dry toilet according to the invention,
Fig. 4 a perspective view of a frame and a housing of the dry toilet according to the invention, and
Fig. 5 a side cross section of a hanging dry toilet in accordance with the present invention in a partially disconnected state.

The same and similar parts and features have been denoted by the same reference numerals in the figures. However, for ease of understanding the figures, not all parts that are required for a practical embodiment have been shown in the figures.

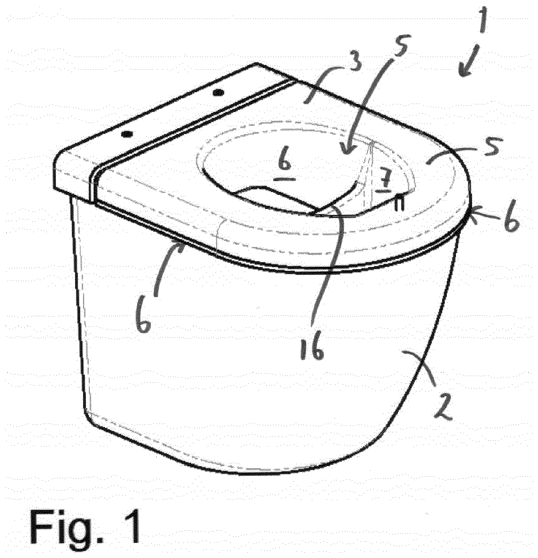

Fig. 1 shows a hanging dry toilet 1 that comprises elements in accordance with the present invention. The dry toilet 1 comprises a housing 2 and a cover portion 3 with a receiving part 4 situated within a circumference of the cover portion 3. More in particular, the cover portion 3 has a seat part 5 near its outer circumference 6 and wherein the receiving part 4 is provided at the inner boundaries of the seat part 5. The receiving part 4 comprises a first receiving part 6 for receiving feces and a second receiving part 7 for receiving urine.

A plate like element 16 may be provided between the first receiving part 6 and the second receiving part 7, so as to prevent urine and feces becoming mixed.

A separate toilet seat (not shown) may be placed on top of the seat part 5 of the cover portion 3. This toilet seat may be connected hingeable to the cover portion 3 or to another element of the dry toilet 1.

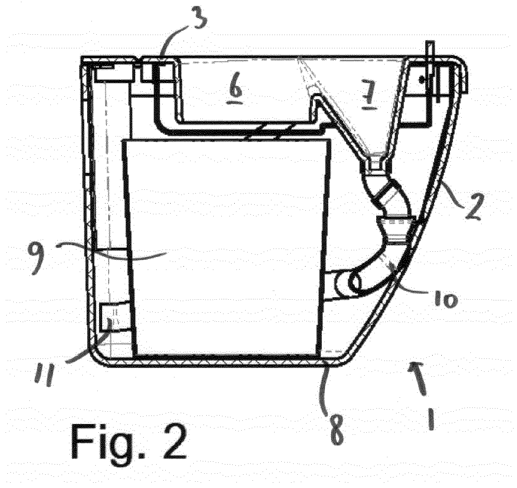

Fig. 2 shows a cross section of the dry toilet 1 according to Fig. 1. The housing 2 and the cover portion 3, including the first receiving part 6 for receiving feces and a second receiving part 7 for receiving urine are clearly visible. The housing 2 has a bottom 8, on which a container 9 is placed. The container 9 is provided for receiving feces and is positioned below the first receiving part 6 for receiving feces.

Furthermore, a drain 10 is shown, that is positioned below the second receiving part 7 for receiving urine. More in particular, the second receiving part 7 for receiving urine ends into an outflow opening 17 that is partially received in the drain 10 or in a carrier element 15 as will be explained hereafter. As a result, urine will flow away in the drain 10. Fig. 2 shows an end section 11 of the drain 10, which may be connected to a regular sewer drainage or may flow out into a fluid container or into the environment, in accordance with legislation.

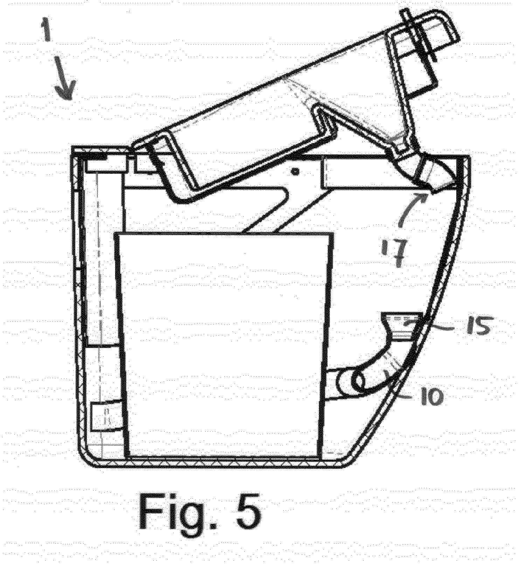

As shown in Fig. 5, the cover portion 3 may be pivoted up so as to provide access to the interior of the housing 2, where the container 9 is situated. When swinging the cover portion up, the container 9 can be removed.

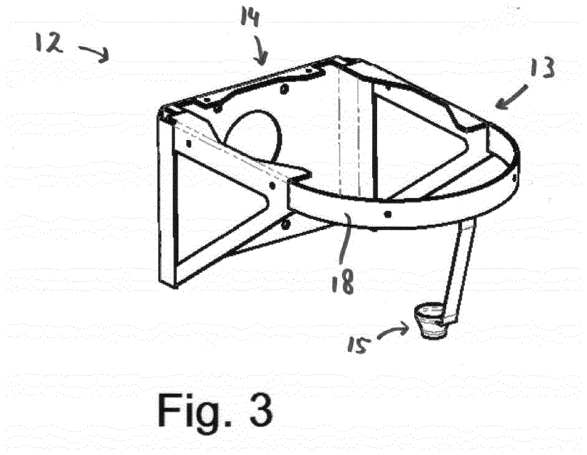

In Fig. 3 a frame 12 is shown, comprising a frame construction 13 for substantially carrying the cover portion 3 and a fixing frame 14 that can be connected to a wall of other suitable structure. The frame construction 13 is coupled to the fixing frame 14, so as to obtain a rigid structure for carrying the dry toilet 1 and a user.

The frame construction 13 comprises a U-shaped frame element 18 for supporting the cover portion 3 over its full length. At a position away from the fixing frame 14 a carrier element 15 for coupling the drain 10 and for receiving the outflow opening 17 of the second receiving part 7 for receiving urine, is provided.

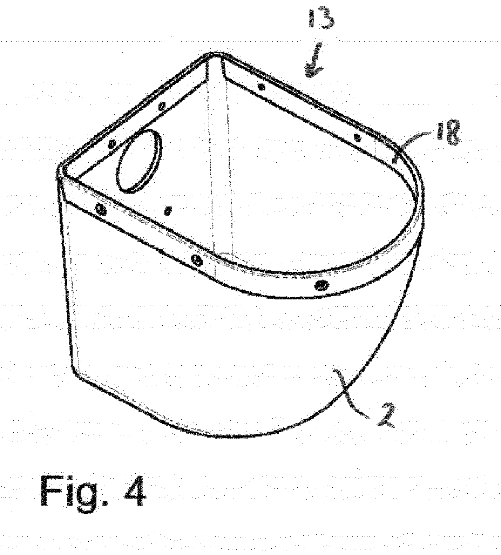

Fig. 4 finally shows a perspective view of the housing 2 mounted to the frame construction 13. The housing 2 substantially surrounds the U-shaped frame element 18 such that a constructional result is obtained after placing the cover portion 3 on top of the frame construction 13, without visible seams.

The invention is not limited to the embodiments as mentioned above and as shown in the drawings. The invention is limited by the claims only.

The invention also relates to all combinations of features described here independently of each other.

## Claims

1. A dry toilet, comprising a frame construction for carrying a cover portion, **characterized in that** the frame construction furthermore comprises a fixing frame for a hanging mounting of the dry toilet to a wall.

2. The dry toilet according to claim 1, wherein the fixing frame is embodied for connection to the wall and the frame construction for carrying the cover portion is embodied for cooperative coupling to the fixing frame.

3. The dry toilet according to claim 1 or 2, wherein the frame construction for carrying the cover portion is embodied for detachable coupling to the fixing frame.

4. The dry toilet according to claim 1, wherein the cover portion comprises a first part for receiving urine and a second part for receiving feces.

5. The dry toilet according to claim 4, wherein the first part of the cover portion for receiving urine is embodied for guiding urine to a drain and wherein the second part of the cover portion for receiving feces is embodied for guiding feces to a container.

6. The dry toilet according to claim 1, wherein at least one of the frame construction for carrying a cover portion and the fixing frame is made of a metal or steel.

7. The dry toilet according to claim 1, wherein the frame construction for carrying a cover portion is embodied for supporting a cover portion with a toilet seat.

8. The dry toilet according to claim 1 or 7 further comprising a cover portion with a toilet seat, wherein the toilet seat is placed above the cover portion and supports on the cover portion when in use.

9. The dry toilet according to claim 8, wherein the cover portion comprises a receiving part for receiving human excrements and urine that is at least partially positioned within a circumference defined by the toilet seat.

10. The dry toilet according to any of the preceding claims, a back side being positioned near the fixing frame and a front side being positioned away from the fixing frame, wherein in the cover portion a part for receiving urine is positioned near the front side and a part for receiving feces is positioned nearer to the back side.

11. The dry toilet according to any of claims 1 to 10, wherein the frame construction for carrying a cover portion comprises a U-shaped frame element, the end of two legs of the U-shaped frame element being positioned near the fixing frame.

12. The dry toilet according to any of the preceding claims, wherein the part for receiving urine is embodied as a funnel shaped portion closed at an upper side against the cover portion and at a bottom side ending in an outflow opening.

13. The dry toilet according to any of the preceding claims, wherein the part for receiving feces is embodied as a funnel shaped portion closed at an upper side against the cover portion and at a bottom side ending in an outflow opening for discharging in a container for feces.

14. The dry toilet according to any of the preceding claims, further comprising a ventilator for air intake from the room the dry toilet is located, through the container for feces and to an outside of the room.

15. The dry toilet according to any of the preceding claims, comprising a housing surrounding the frame construction for carrying the cover portion and wherein the housing is embodied for supporting the container for feces, preferably wherein the housing comprises a bottom for supporting the container for feces.
